# EUROPÄISCHE PATENTANMELDUNG

(11) **EP 4 406 694 A1**
(43) Veröffentlichungstag der Anmeldung: **31.07.2024**
(21) Anmeldenummer: 24153786.9
(22) Anmeldetag: 24.01.2024
(51) Int. Cl.: B23Q 1/54, B23Q 1/01

(54) **WERKZEUGMASCHINE UND VERWENDUNG EINER WERKZEUGMASCHINE**

(30) Priorität: 26.01.2023 DE 102023101936
(71) Anmelder: CHIRON Group SE, 78532 Tuttlingen (DE)
(72) Erfinder: Gems, Daniel, 78607 Talheim (DE); Widinger, Tobias, 78315 Radolfzell (DE)
(74) Vertreter: Witte, Weller & Partner Patentanwälte mbB

(57) **Zusammenfassung**

Eine Werkzeugmaschine (10, 410) weist ein Gestell (12) auf, das zumindest eine vertikal orientierte Werkzeugspindel (22) und einen um eine globale Schwenkachse (54) schwenkbaren Schwenkträger (50) trägt. Die Werkzeugspindel (22) und der Schwenkträger (50) sind relativ zueinander verfahrbar, umfassend eine Bewegung der Werkzeugspindel (22) relativ zum Gestell (12) in einer ersten horizontalen Richtung (32) und einer vertikalen Richtung (40). Der Schwenkträger (50) weist einen Rahmen (70) und zumindest einen Werkstückhalter (78) zur Aufnahme eines Werkstücks (92) am Rahmen (70) auf. Der Rahmen (70) weist zwei Querstege (72) und zwei Längsstege (74) auf und umgibt eine Werkstückhalteöffnung (76). Die zwei Querstege (72) sind in der ersten horizontalen Richtung (32) voneinander beabstandet, die parallel zur globalen Schwenkachse (54) ist. Die zwei Querstege (72) sind an ihren voneinander abgewandten Seiten jeweils schwenkbar gelagert, um den Rahmen (70) bei der Bearbeitung um die globale Schwenkachse (54) zu verschwenken. Die zwei Längsstege (74) tragen zumindest zwei paarweise zueinander konzentrische lokale Schwenklager (82), die eine lokale Schwenkachse (84) definieren, die orthogonal zur globalen Schwenkachse (54) ist. Der Werkstückhalter (78) ist um die lokale Schwenkachse (84) schwenkbar.

## Beschreibung

Die vorliegende Offenbarung bezieht sich auf eine Werkzeugmaschine zur Bearbeitung von Werkstücken sowie auf eine Verwendung einer solchen Werkzeugmaschine. In beispielhaften Ausgestaltungen bezieht sich die vorliegende Offenbarung auf eine Werkzeugmaschine zur Bearbeitung von Werkstücken, die einerseits relativ großflächig und andererseits relativ flach sind, wobei die Bearbeitung gegebenenfalls mehrachsig zu erfolgen hat.

Aus der 5,759,140 A ist eine Vorrichtung zur Erzeugung von Bohrungen von Kurbelwellen bekannt. Die Vorrichtung weist ein Gestell und einen Fahrständer auf, der einen Bohrkopf mit zwei Bohrspindeln trägt, wobei der Bohrkopf in drei translatorischen Achsen gegenüber dem Gestell verfahrbar ist. Zur Aufnahme der Kurbelwellen ist eine Schwenkbrücke vorgesehen, die zwei zueinander orthogonal orientierte Schwenkachsen bereitstellt. Lagerböcke für die erste Schwenkachse sind am Maschinenbett festgelegt. Dort ist ein Schwenkrahmen aufgenommen, der wiederum zwei Schwenklager für die zweite Schwenkachse trägt. Die Bearbeitung erfolgt mit horizontal orientierten Bohrspindeln. Die translatorische Relativbewegung zwischen den Kurbelwellen und dem Bohrkopf erfolgt über Absolutbewegungen des Bohrkopfes gegenüber dem Gestell. Am Schwenkrahmen können zwei Kurbelwellen an den Schwenklagern für die zweite Schwenkachse aufgenommen werden. Die beiden Kurbelwellen sind über einen gemeinsamen Schwenkantrieb zwangsgekoppelt, so dass Schwenkbewegungen immer simultan erfolgen.

Aus der DE 10 2019 111 873 A1 ist eine Werkzeugmaschine mit einem Gestell mit einem feststehenden Portal bekannt, an dem zwei vertikal orientierte Werkzeugspindeln angeordnet sind, wobei die beiden Spindeln jeweils in einer vertikalen Richtung und einer ersten horizontalen Richtung relativ zum Portal verfahrbar sind. Am Gestell ist ferner ein als Schwenkbrücke gestalteter Werkstücktisch zur Aufnahme von Werkstücken gelagert. Die Schwenkbrücke ist am Gestell in einer zweiten horizontalen Richtung verfahrbar. Auf diese Weise werden insgesamt drei translatorische Achsen bereitgestellt. Ferner ist die Schwenkbrücke um eine horizontal orientierte Schwenkachse schwenkbar, die orthogonal zur zweiten horizontalen Richtung orientiert ist. Die Schwenkbrücke trägt zwei Plätze zur Werkstückaufnahme, die jeweils einen Drehtisch umfassen, dessen Drehachse orthogonal zur Schwenkachse der Schwenkbrücke orientiert ist. Auf diese Weise werden zwei rotatorische Achsen bereitgestellt, so dass insgesamt eine Bearbeitung in fünf Achsen ermöglicht ist.

Mit einer solchen Werkzeugmaschine können zwei Werkstücke simultan in fünf Achsen bearbeitet werden. Die beiden Werkzeugspindeln können miteinander (mechanisch oder elektronisch) gekoppelt sein, so dass beide Werkzeugspindeln identische Arbeitsschritte ausführen. Es ist jedoch auch vorstellbar, die beiden Werkzeugspindeln unabhängig voneinander anzusteuern.

Werkzeugmaschinen können als Fertigungszentrum zum automatischen Werkzeugwechsel befähigt sein. Eine Werkzeugmaschine, die sowohl zum automatischen Werkzeugwechsel als auch zum automatischen Werkstückwechsel befähigt ist, wird üblicherweise als flexible Fertigungszelle bezeichnet.

Zur Bearbeitung können die Werkstücke direkt auf einem Werkstückhalter befestigt und fixiert werden. Gerade mit Blick auf einen automatischen Werkstückwechsel werden jedoch häufig auch sogenannte Paletten benutzt, die als temporäre Träger für die Werkstücke fungieren, so dass die Handhabung und Fixierung der Werkstücke mittelbar über die Paletten erfolgen kann. Sofern im Rahmen der vorliegenden Offenbarung von der Bearbeitung von Werkstücken die Rede ist, umfasst dies auch die Bearbeitung und Handhabung von auf Paletten fixierten Werkstücken.

Zumindest in beispielhaften Ausgestaltungen bezieht sich die vorliegende Offenbarung auf relativ flache Werkstücke, die eine Längserstreckung aufweisen, die (gegebenenfalls deutlich) größer als die Höhenerstreckung ist. In beispielhaften Ausgestaltungen ist auch die Quererstreckung (beispielsweise um ein Mehrfaches) größer als die Höhenerstreckung.

Beispielhaft handelt es sich bei den Werkstücken um Profilteile oder Profilrahmen, Schaufeln für Strömungsmaschinen (beispielsweise für Turbinen), Trägerteile, Batterierahmen, Karosserieteile, und dergleichen. Diese Bauteile bestehen üblicherweise aus Metallwerkstoffen, etwa aus Stahlwerkstoffen, Aluminiumwerkstoffen, Magnesiumwerkstoffen und dergleichen. Gegebenenfalls sind auch einschlägige Werkstücke aus nichtmetallischen Werkstoffen zu bearbeiten, beispielsweise aus Keramikwerkstoffen, Kunststoffwerkstoffen und dergleichen. Dies umfasst beispielhaft auch glasfaserverstärkten Kunststoff (GFK) und kohlenstofffaserverstärktem Kunststoff (CFK). Gegebenenfalls sind auch einschlägige Werkstücke aus Verbundwerkstoffen zu bearbeiten.

Wenn derartige und ähnliche Bauteile mehrachsig zu bearbeiten sind, erfolgt dies notwendigerweise auf Werkzeugmaschinen, die eine entsprechende Anzahl an Freiheitsgraden für eine mehrachsige Bearbeitung (Bearbeitung in vier oder fünf Achsen) bereitstellen. Dies umfasst beispielsweise drei translatorische Achsen und eine oder zwei rotatorische Achsen.

Dies kann jedoch dazu führen, dass ein gegebener Arbeitsraum der Werkzeugmaschine nur unzureichend ausgenutzt wird, weil eine Dimension (beispielsweise Höhenerstreckung) der Werkstücke deutlich kleiner als eine oder zwei der beiden anderen Dimensionen (beispielsweise Längserstreckung und Quererstreckung) ist. Dies führt insgesamt zu einem erhöhten Aufwand und zu einer begrenzten Produktivität.

Vor diesem Hintergrund liegt der vorliegenden Offenbarung die Aufgabe zugrunde, eine Werkzeugmaschine anzugeben, mit der die Leistungsfähigkeit und der Durchsatz bei der mehrachsigen Bearbeitung relativ flacher Bauteile erhöht werden sollen. Dies soll vorzugsweise nur mit geringem Zusatzaufwand bei der Werkzeugmaschine als solches einhergehen. Insbesondere soll bei gegebenem Maschinenkonzept möglichst die Kapazität zur Bearbeitung einschlägiger Werkstücke steigen. Die Bearbeitung soll gleichwohl präzise und schnell vonstattengehen können. Ferner sollen im Rahmen der vorliegenden Offenbarung günstige Verwendungen einer solchen Werkzeugmaschine zur Bearbeitung von Werkstücken mit spezifischen geometrischen Randbedingungen angegeben werden.

Gemäß einem ersten Aspekt bezieht sich die vorliegende Offenbarung auf eine Werkzeugmaschine zur Bearbeitung von Werkstücken, die Folgendes aufweist:
- ein Gestell, das zumindest eine vertikal orientierte Werkzeugspindel und einen um eine globale Schwenkachse schwenkbaren Schwenkträger trägt,
   wobei die zumindest eine Werkzeugspindel und der Schwenkträger relativ zueinander verfahrbar sind, um Werkstücke in einem Arbeitsraum zu bearbeiten, umfassend zumindest eine Bewegung der Werkzeugspindel relativ zum Gestell in einer ersten horizontalen Richtung und einer vertikalen Richtung,
   wobei der Schwenkträger Folgendes aufweist:
- einen vorzugsweise an seinem Umfang geschlossenen Rahmen, der zwei Querstege und zwei Längsstege aufweist und eine Werkstückhalteöffnung umgibt,
- zumindest einen Werkstückhalter zur Aufnahme eines Werkstücks am Rahmen,
   wobei die zwei Querstege in der ersten horizontalen Richtung voneinander beabstandet sind, die parallel zur globalen Schwenkachse ist,
   wobei die zwei Querstege an ihren voneinander abgewandten Seiten jeweils schwenkbar gelagert sind, um den Rahmen bei der Bearbeitung um die globale Schwenkachse zu verschwenken,
   wobei die zwei Längsstege, insbesondere an ihren einander zugewandten Seiten, zumindest zwei paarweise zueinander konzentrische lokale Schwenklager tragen, die eine lokale Schwenkachse definieren, die orthogonal zur globalen Schwenkachse ist, und
   wobei der Werkstückhalter um die lokale Schwenkachse schwenkbar ist.

Die Aufgabe der Offenbarung wird auf diese Weise gelöst.

Eine Werkzeugmaschine mit dieser Struktur eignet sich für flächige Werkstücke mit beschränkter Höhenerstreckung. Es besteht die Möglichkeit, einen gegebenen Bauraum einer Werkzeugmaschine optimal zu nutzen, indem das Werkstück mit seiner Längserstreckung parallel zur lokalen Schwenkachse orientiert und am Werkstückhalter festgelegt wird. Dies erlaubt in beispielhaften Ausgestaltungen die Anordnung von zwei oder mehr Werkstücken nebeneinander an/auf einem (globalen) Schwenkträger im Arbeitsraum der Werkzeugmaschine.

Eine Werkzeugmaschine mit dieser Struktur eignet sich ferner für die Bearbeitung von Werkstücken in fünf Achsen, wobei eine Schwenkachse nur einen relativ geringen Schwenkbereich erforderlich macht. Diese Schwenkachse wird der globalen Schwenkachse zugeordnet.

Die zumindest eine Werkzeugspindel ist vertikal orientiert. Die Auslegung als Vertikalmaschine ist günstig für den Spänefall. Ferner ergibt sich eine Eignung für die Bearbeitung vergleichsweise flacher Bauteile mit plattenförmigem Bauraum. Aufgrund der Gestaltung als Vertikalmaschine sind (angetriebene) Werkzeuge für die Bearbeitung um eine vertikal orientierte Längsachse rotatorisch antreibbar.

In beispielhaften Ausgestaltungen können auf diese Weise zwei Werkstücke mit zwei Werkzeugspindeln simultan in einem Arbeitsraum bearbeitet werden, dessen Abmessungen bei konventioneller Gestaltung lediglich die Anordnung eines einzigen Werkstücks erlauben würde.

Der Schwenkträger kann auch als lokaler Schwenkbrückenrahmen bezeichnet werden. Der Schwenkträger weist eine Werkstückhalteöffnung auf, die vom Rahmen nach außen begrenzt wird. Innerhalb der Werkstückhalteöffnung ist zumindest ein Werkstückhalter angeordnet, wobei der zumindest eine Werkstückhalter um eine lokale Schwenkachse schwenkbar ist.

Der Schwenkträger weist beispielsweise im Vergleich zu konventionellen Schwenkbrücken eine deutlich größere Tiefenerstreckung (Y-Erstreckung) auf. Die Seitenerstreckung/Längserstreckung (X-Erstreckung) ist üblicherweise durch den Abstand zweier globaler Schwenklager für die globale Schwenkachse im Arbeitsraum definiert. Aufgrund der Tiefenerstreckung des Schwenkträgers ist gegebenenfalls keine vollständige Rotation um die globale Schwenkachse (A-Achse) möglich. Stattdessen ist zumindest in beispielhaften Ausgestaltungen lediglich eine begrenzte Rotation um die globale Schwenkachse möglich. Dies erlaubt jedoch die Aufnahme von Werkstücken, deren Längserstreckung an die (verlängerte) Tiefenerstreckung des Schwenkträgers angepasst ist.

Auf diese Weise können Werkstücke, die bei konventioneller Schwenkbrücke mit ihrer Längserstreckung parallel zur globalen Schenkachse im Arbeitsraum angeordnet werden müssten, nun idealerweise orthogonal hierzu orientiert und platziert werden. Die Längserstreckung der Werkstücke ist dann näherungsweise parallel zur lokalen Schwenkachse. Wenn die Quererstreckung der Werkstücke kleiner als die Längserstreckung ist, sind um die lokale Schwenkachse gegebenenfalls große Verschwenkwinkel möglich, beispielsweise 180° oder Vielfache davon.

In einer beispielhaften Ausgestaltung schneidet die zumindest eine lokale Schwenkachse die globale Schwenkachse. Der Schwenkträger und der zumindest eine lokale Werkstückhalter sind miteinander verschachtelt. In einer beispielhaften Ausgestaltung ist der zumindest eine Werkstückhalter innerhalb der Werkstückhalteöffnung im Schwenkträger angeordnet.

In einer beispielhaften Ausgestaltung sind für die globale Schwenkachse zwei am Gestell gelagerte Schwenklager vorgesehen, deren vertikale Position die Höhe der globalen Schwenkachse im Arbeitsraum definiert. Bei den gegebenen Maschinenkonzept ist es gegebenenfalls von Vorteil, die globalen Schwenklager etwas erhöht anzuordnen (verglichen mit konventionellen Schwenkbrücken), damit auch bei einer besonders ausgeprägten Tiefenerstreckung des Schwenkträgers ein genügend großer Schwenkwinkel ermöglicht ist.

Die Relativbewegung zwischen der Werkzeugspindel und dem Gestell umfasst üblicherweise eine Bewegung der Werkzeugspindel in zumindest einer ersten horizontalen Richtung (X-Richtung) und einer vertikalen Richtung (Z-Richtung). Dies ist beispielsweise bei einer Werkzeugmaschine in Portalbauweise mit feststehendem Portal der Fall. Die dritte translatorische Achse (Y-Richtung) kann dann durch eine Bewegung des Werkstückhalters bzw. des Schwenkträgers bereitgestellt werden.

Bei einer Werkzeugmaschine in Gantry-Bauweise (Fahrportal) oder in Fahrständer-Bauweise kann die Werkzeugspindel in drei translatorischen Achsen zum Gestell verfahren werden. Bei einer solchen Gestaltung werden der Schwenkträger/Werkstückhalter nicht translatorisch bewegt.

Bei den Rahmen des Schwenkträgers handelt es sich insbesondere um ein geschlossenes Rahmenprofil, das in seinem Zentrum die Werkstückhalteöffnung aufweist. Der Rahmen wird in einem Ausführungsbeispiel durch die Querstege und die Längsstege gebildet, die jeweils um etwa 90° zueinander orientiert sind. Üblicherweise sind die Längsstege etwas länger als die Querstege. Die Größe der Werkstückhalteöffnung ergibt sich durch den jeweiligen Abstand einander zugewandter Seiten der Längsstege und der Querstege.

Die globale Schwenkachse kann auch als A-Achse bezeichnet werden. Die zumindest eine lokale Schwenkachse kann auch als B-Achse bezeichnet werden. Die (globalen und lokalen) Schwenkachsen sind üblicherweise mit einem Schwenkantrieb gekoppelt, der für die Schwenkbewegung sorgt.

Die zumindest eine Werkzeugspindel weist üblicherweise einen um eine vertikale Achse rotierbaren Werkzeughalter zum Antrieb eines Werkzeugs auf. Der Schwenkträger ist relativ zum Gestell um eine horizontale Achse schwenkbar. Der zumindest eine Werkstückhalter ist relativ zum Schwenkträger um eine Achse schwenkbar, die orthogonal zur horizontalen Schwenkachse des Schwenkträgers orientiert ist. Die (lokale) Schwenkachse des zumindest einen Werkstückhalters ist nicht dauerhaft horizontal orientiert. Je nach möglichem Schwenkbereich für den (globalen) Schwenkträger um die globale Schwenkachse kann die lokale Schwenkachse eine Neigung gegenüber der Horizontalen aufweisen.

In einer beispielhaften Ausgestaltung weist die Werkzeugmaschine zwei Werkzeugspindeln und beim Schwenkträger zwei jeweils um eine lokale Schwenkachse verschwenkbare Werkstückhalter auf, wobei jeweils eine Werkzeugspindel einem Werkstückhalter zugeordnet ist, um dort ein Werkstück zu bearbeiten. Wenn die Längsseite des Werkstücks etwa parallel zur Tiefenerstreckung (Y-Richtung) orientiert ist, können gegebenenfalls zwei oder mehr Werkstücke nebeneinander am/im Schwenkträger aufgenommen werden. Die lokalen Schwenkachsen der Werkstückhalter sind parallel zueinander orientiert.

Gemäß einer beispielhaften Ausgestaltung trägt das Gestell ein Portal, an dem eine erste Werkzeugspindel und eine zweite Werkzeugspindel translatorisch verfahrbar gelagert sind, die zueinander parallel orientiert und in der ersten horizontalen Richtung zueinander versetzt sind, wobei die beiden Werkzeugspindeln am Portal in der ersten horizontalen Richtung (X-Richtung) und der vertikalen Richtung (Z-Richtung) verfahrbar sind. Diese Gestaltung ist günstig in Zusammenhang mit der Gestaltung der Werkzeugmaschine als Vertikalmaschine. Unter dem üblicherweise brückenartig gestalteten Portal ist genügend Platz für eine Relativbewegung zwischen dem Bearbeitungswerkzeug und dem Werkstück in der zweiten horizontalen Richtung (Y-Richtung).

Gemäß einer weiteren beispielhaften Ausgestaltung sind die beiden Werkzeugspindeln unabhängig voneinander in der ersten horizontalen Richtung und der vertikalen Richtung gegenüber dem Portal verfahrbar. Auf diese Weise können zwei Werkstücke umfassend gleichzeitig bearbeitet werden, ohne dass es einer mechanischen Verbindung zwischen den Werkzeugspindeln bedarf. Gegebenenfalls können die beiden Spindeln elektronisch (steuerungstechnisch) synchronisiert angetrieben werden, um gleichartige Werkstücke zu bearbeiten.

Gemäß einer weiteren beispielhaften Ausgestaltung ist das Portal ein am Gestell festgelegtes Festportal, wobei der Schwenkträger in einer zweiten horizontalen Richtung (Y-Richtung) orthogonal zur ersten horizontalen Richtung (X-Richtung) am Gestell verfahrbar ist. Gemäß einer weiteren beispielhaften Ausgestaltung ist das Portal ein in der zweiten horizontalen Richtung (Y-Richtung) orthogonal zur ersten horizontalen Richtung (X-Richtung) am Gestell verfahrbares Fahrportal. Auf diese Weise kann sich in der zweiten horizontalen Richtung ein beträchtlicher maximaler Verfahrweg ergeben, der an die Erstreckung der Werkstücke in dieser Richtung angepasst ist.

Gemäß einer weiteren beispielhaften Ausgestaltung sind zwei Werkstückhalter in der ersten horizontalen Richtung (X-Richtung) versetzt zueinander am Schwenkträger angeordnet, die unabhängig voneinander jeweils um eine lokale Schwenkachse verschwenkbar sind. Auf diese Weise können mehrere Werkstücke gleichzeitig bearbeitet werden. Voneinander unabhängige Antriebe für die lokalen Schwenkachsen für die beiden Werkstückhalter erlauben voneinander unabhängige Schwenkbewegungen der beiden Werkstückhalter. Es ist jedoch auch vorstellbar, die Schwenkbewegung der beiden Werkstückhalter um die lokale Schwenkachse elektronisch (steuerungstechnisch) zu synchronisieren. Es ist grundsätzlich vorstellbar, mehr als zwei Werkstückhalter in der ersten horizontalen Richtung versetzt zueinander am Schwenkträger anzuordnen. Beispielhaft können auf diese Weise vier, sechs oder acht Werkstücke gleichzeitig am Schwenkträger befestigt werden.

Gemäß einer weiteren beispielhaften Ausgestaltung liegt die lokale Schwenkachse in einer Schwenkebene, die parallel zur globalen Schwenkachse ist und die zwei Querstege und die zwei Längsstege schneidet. In einer beispielhaften Ausgestaltung schneiden die lokale Schwenkachse bzw. die Schwenkebene die globale Schwenkachse. In einer beispielhaften Ausgestaltung ist die Schwenkebene in Bezug auf eine Höhenerstreckung der Längsstege und der Querstege etwa mittig positioniert.

Gemäß einer weiteren beispielhaften Ausgestaltung ist der Werkstückhalter bei Betrachtung entlang der lokalen Schwenkachse (die dann senkrecht zur Ansichtsebene ist) in der Werkstückhalteöffnung von den Längsstegen verdeckt. Gemäß dieser Ausgestaltung ist also der zumindest eine Werkstückhalter bei einer seitlichen Betrachtung (frontale Ansicht der Werkzeugmaschine bei Neutrallage des Schwenkträgers) des Schwenkträgers vom Rahmen, insbesondere von den Längsstegen, verdeckt. Auf diese Weise ist der Werkstückhalter umfänglich von den Längsstegen und den Querstegen geschützt. Die kann auch für ein entsprechend flach gestaltetet Werkstück gelten.

Gemäß einer weiteren beispielhaften Ausgestaltung tragen die zwei Längsstege jeweils zumindest zwei lokale Schwenklager, die in der ersten horizontalen Richtung voneinander beabstandet sind. Demgemäß sind zumindest zwei Werkstückhalter am Schwenkträger aufgenommen. Es kann eine Mehrzahl von Werkstücken gleichzeitig am Schwenkträger aufgenommen werden. In einer beispielhaften Ausgestaltung entspricht die Anzahl der Werkzeugspindeln der Werkzeugmaschine der Anzahl der Werkstückhalter am Schwenkträger.

Gemäß einer weiteren beispielhaften Ausgestaltung sind am Gestell eine erste Werkzeugspindel und eine zweite Werkzeugspindel aufgenommen, die zueinander parallel orientiert und in der ersten horizontalen Richtung zueinander versetzt sind. Die beiden Werkzeugspindeln können mechanisch oder elektronisch miteinander gekoppelt sein, um simultan zwei Werkstücke zu bearbeiten.

Gemäß einer weiteren beispielhaften Ausgestaltung umfasst der zumindest eine Werkstückhalter eine lokale Schwenkbrücke zur Werkstückauflage, wobei sich die lokale Schwenkbrücke zwischen den zwei Längsstegen erstreckt. Auf diese Weise weist die Werkzeugmaschine zumindest zwei ineinander verschachtelte Schwenkbrücken auf, nämlich eine globale Schwenkbrücke, die durch den Schwenkträger gebildet wird, und eine oder mehrere lokale Schwenkbrücke innerhalb des Schwenkträgers, die dem Werkstückhalter zugehörig sind. Werkstücke oder Paletten mit Werkstücken können zu Bearbeitungszwecken auf der lokalen Schwenkbrücke fixiert werden.

Gemäß einer weiteren beispielhaften Ausgestaltung umfasst der zumindest eine Werkstückhalter einen ersten Abschnitt bei einem ersten der beiden lokalen Schwenklager und einen zweiten Abschnitt bei einem zweiten der beiden lokalen Schwenklager, zwischen denen ein Werkstück freihängend aufnehmbar ist. Dies eignet sich für Werkstücke mit hinreichender Eigenstabilität. Ein freihängend aufgenommenes Werkstück ist an zwei voneinander abgewandten Enden eingespannt. Damit kann bedarfsweise eine Bearbeitung des Werkstücks an einer Vorderseite und einer davon abgewandten Rückseite durchgeführt werden, weil die Rückseite nicht durch eine Schwenkbrücke verbaut ist. Dies umfasst üblicherweise eine Schwenkbewegung des Werkstücks um etwa 180° um die lokale Schwenkachse, damit die Vorderseite oder die Rückseite bereitgestellt wird.

Gemäß einer weiteren beispielhaften Ausgestaltung umfasst der zumindest eine Werkstückhalter einen ersten Abschnitt bei einem ersten der beiden lokalen Schwenklager und einen zweiten Abschnitt bei einem zweiten der beiden lokalen Schwenklager, zwischen denen eine Palette (Spannvorrichtung) für ein Werkstück freihängend aufnehmbar ist. Das Werkstück kann mitsamt der Palette zugeführt und abgeführt werden. Die Palette kann ein Werkstück für die Bearbeitung bereitstellen. In einer weiteren beispielhaften Ausgestaltung umfasst die Palette eine erste Seite zur Aufnahme des ersten Werkstücks und eine zweite Seite zur Aufnahme eines zweiten Werkstücks. Es versteht sich, dass grundsätzlich auch zwei oder mehr Werkstücke gemeinsam auf einer Seite der Palette angeordnet sein können.

Gemäß einer weiteren beispielhaften Ausgestaltung ist der Schwenkträger ausgehend von einer horizontalen Neutrallage betragsmäßig um maximal 30° um die globale Schwenkachse schwenkbar. Gemäß einer weiteren beispielhaften Ausgestaltung ist der Schwenkträger ausgehend von einer horizontalen Neutrallage betragsmäßig um maximal 20° um die globale Schwenkachse schwenkbar. Gemäß einer weiteren beispielhaften Ausgestaltung ist der Schwenkträger ausgehend von einer horizontalen Neutrallage betragsmäßig um maximal 15° um die globale Schwenkachse schwenkbar. Gemäß einer weiteren beispielhaften Ausgestaltung ist der Schwenkträger ausgehend von einer horizontalen Neutrallage betragsmäßig um maximal 10° um die globale Schwenkachse schwenkbar.

Damit musst nicht der gesamte Störkreis freigehalten werden, der sich bei einer vollständigen Rotation (360°) des Schwenkträgers ergäbe. Der Störkreis bzw. eine sich daraus ergebende Störkontur bildet eine rotationssymmetrische Fläche, die sich bei einer vollständigen Rotation des Schwenkträgers um die globale Schwenkachse ergibt, wobei der Störkreis zum Beispiel die Bahn einer jeweiligen Außenkontur des Schwenkträgers mit maximalem Abstand von der globalen Schwenkachse beschreibt.

Es hat sich jedoch gezeigt, dass gleichwohl eine Vielzahl von Werkstücken in vier oder fünf Achsen bearbeitet werden kann, auch wenn der mögliche Schwenkbereich um die globale Schwenkachse limitiert ist.

Gemäß einer weiteren beispielhaften Ausgestaltung ist der zumindest eine Werkstückhalter ausgehend von einer horizontalen Neutrallage zumindest um betragsmäßig 180° um die lokale Schwenkachse schwenkbar. Gemäß einer weiteren beispielhaften Ausgestaltung ist der zumindest eine Werkstückhalter ausgehend von einer horizontalen Neutrallage um betragsmäßig 180° und ein Vielfaches davon um die lokale Schwenkachse schwenkbar. Mit anderen Worten kann gemäß dieser Ausgestaltung der Werkstückhalter mitsamt einem darauf fixierten Werkstück beliebig um die lokale Schwenkachse rotiert werden.

Gemäß einer weiteren beispielhaften Ausgestaltung ist der Rahmen des Schwenkträgers an seiner Unterseite in der Neutrallage mit seinen Längsstegen von einer Begrenzung des Arbeitsraums beabstandet, wobei ein effektives Abstandsmaß kleiner als ein Störkreisradius des Rahmens ist. Dies gilt insbesondere für einen vertikalen Abstand. Gemäß einer weiteren beispielhaften Ausgestaltung beträgt das effektive Abstandsmaß weniger als 80 % des Störkreisradius des Rahmens. Gemäß einer weiteren beispielhaften Ausgestaltung beträgt das effektive Abstandsmaß weniger als 60 % des Störkreisradius des Rahmens. Gemäß einer weiteren beispielhaften Ausgestaltung beträgt das effektive Abstandsmaß weniger als 40 % des Störkreisradius des Rahmens.

Gemäß einer weiteren beispielhaften Ausgestaltung ist der Rahmen des Schwenkträgers an seiner Unterseite in der Neutrallage mit seinen Längsstegen von einer Begrenzung des Arbeitsraums beabstandet, wobei ein effektives Abstandsmaß weniger als die Hälfte einer Quererstreckung (Y-Erstreckung in der Neutrallage) des Rahmens beträgt. Dies gilt insbesondere für einen vertikalen Abstand. Gemäß einer weiteren beispielhaften Ausgestaltung beträgt das effektive Abstandsmaß weniger als 40 % der Quererstreckung des Rahmens. Gemäß einer weiteren beispielhaften Ausgestaltung beträgt das effektive Abstandsmaß weniger als 30 % der Quererstreckung des Rahmens. Gemäß einer weiteren beispielhaften Ausgestaltung beträgt das effektive Abstandsmaß weniger als 20 % der Quererstreckung des Rahmens. Dies gilt insbesondere dann, wenn der Rahmen des Schwenkträgers bezüglich der globalen Schwenkachse symmetrisch oder im Wesentlichen symmetrisch gestaltet ist.

Um eine vollständige Rotation des Schwenkträgers um die globale Schwenkachse zu erlauben, müsste das effektive Abstandsmaß größer sein als eine effektive (größte) radiale Erstreckung des Schwenkträgers. Dies würde jedoch zu einem hohen Bauraumbedarf führen, insbesondere hinsichtlich der Höhenerstreckung (Z-Richtung) des Arbeitsraums. Sofern jedoch lediglich begrenzte Verschwenkwinkel um die globale Schwenkachse benötigt sind, kann der Schwenkträger näher an eine (beispielsweise untere) Arbeitsraumbegrenzung heranrücken. Ähnliches gilt für die Begrenzung des Arbeitsraums nach oben, dort muss beispielsweise der von den Werkzeugspindeln auch in einer vollständig zurückgezogenen Stellung beanspruchte Raum beachtet werden. Je kleiner der erforderliche Verschwenkwinkel um die globale Schwenkachse, desto größer kann die Tiefenerstreckung/Quererstreckung des Schwenkträgers sein, und desto größer kann die Längserstreckung eines an dem zumindest einen Werkstückhalter aufgenommenen Werkstücks sein.

Gemäß einer weiteren beispielhaften Ausgestaltung ist der zumindest eine Werkstückhalter dazu ausgebildet, zwei Werkstücke aufzunehmen, die in Bezug auf die lokale Schwenkachse einander gegenüberliegend angeordnet sind. Auf diese Weise können mit einem Werkstückhalter nacheinander zwei Werkstücke bearbeitet werden, wobei der Werkstückhalter näherungsweise um 180° um die lokale Schwenkachse verschwenkt wird, um ein zuvor aus Sicht der Werkzeugspindel rückwärtig angeordnetes Werkstück für eine Bearbeitung bereitzustellen. Gemäß einer beispielhaften Ausgestaltung ist eine lokale Schwenkbrücke vorgesehen, die eine erste Seite und eine zweite Seite aufweist, an denen jeweils ein Werkstück aufnehmbar ist. Gemäß einer weiteren beispielhaften Ausgestaltung ist eine am Werkstückhalter freihängend zwischen den beiden Längsstegen aufnehmbare Palette vorgesehen, die eine erste Seite und eine zweite Seite aufweist, an denen jeweils ein Werkstück aufnehmbar ist.

Gemäß einer weiteren beispielhaften Ausgestaltung ist der Schwenkträger ferner in einer zweiten horizontalen Richtung translatorisch am Gestell verfahrbar, die orthogonal zur ersten horizontalen Richtung und zur vertikalen Richtung ist.

Gemäß dieser Ausgestaltung ist also eine translatorische Achse (üblicherweise Y-Achse) beim Werkstück vorgesehen. Eine solche Gestaltung ergibt sich beispielhaft bei einer Werkzeugmaschine mit Festportal und bei einer Werkzeugmaschine mit Fahrständer und horizontal verfahrbarem Werkstückträger. Die globalen Schwenklager, die die globale Schwenkachse definieren, sind in einer horizontalen Richtung verfahrbar.

Gemäß einer weiteren beispielhaften Ausgestaltung ist die Werkzeugspindel ferner in einer zweiten horizontalen Richtung translatorisch am Gestell verfahrbar, die orthogonal zur ersten horizontalen Richtung und zur vertikalen Richtung ist. Gemäß dieser Ausgestaltung sind die globalen Schwenklager, die die globale Schwenkachse definieren, nicht horizontal verfahrbar. Eine solche Gestaltung ergibt sich beispielsweise bei einer Werkzeugmaschine in Gantry-Bauweise mit einem Fahrbalken sowie bei einer Maschine in Fahrständer-Bauweise, bei der der Fahrständer auf einem Kreuzschlitten oder einem T-Schlitten gelagert und folglich in zwei horizontalen Achsen verfahrbar ist.

Gemäß einem weiteren Aspekt bezieht sich die vorliegende Offenbarung auf eine Verwendung einer Werkzeugmaschine gemäß zumindest einer der hierin beschriebenen Ausgestaltungen zur Bearbeitung flacher Werkstücke mit einer Längserstreckung, einer Quererstreckung und einer Höhenerstreckung, wobei die Längserstreckung zumindest das Fünffache der Höhenerstreckung beträgt. Die Werkzeugmaschine eignet sich insbesondere für Werkstücke, die relativ großflächig, aber hinreichend flach gestaltet sind.

Gemäß einer weiteren beispielhaften Ausgestaltung erfolgt die Verwendung zur Bearbeitung von Werkstücken, deren Längserstreckung kleiner als eine lichte Weite zwischen den zwei Längsstegen des Rahmens des Schwenkträgers ist. Ein solcher Schwenkträger mit "übergroßer" Tiefenerstreckung erlaubt gegebenenfalls die Anordnung zweier Werkstücke nebeneinander mit zueinander parallelen lokalen Schwenkachsen, die jeweils orthogonal zur globalen Schwenkachse durch den Schwenkträger orientiert sind. Die Werkstücke können dann zwischen den Längsstegen aufgenommen und teilweise vom Rahmen verdeckt werden.

Gemäß einer beispielhaften Ausgestaltung der Verwendung beträgt die Längserstreckung der Werkstücke zumindest das Doppelte der Quererstreckung, wobei die Quererstreckung zumindest das Dreifache der Höhenerstreckung beträgt. Die Werkstücke können mit ihrer Längserstreckung zunächst näherungsweise entlang der lokalen Schwenkachse orientiert werden. Dies kann eine freie Verschwenkbarkeit um die lokale Schwenkachse gewährleisten.

Gemäß einer beispielhaften Ausgestaltung der Verwendung werden die Werkstücke freihängend zwischen einem ersten Abschnitt des Werkstückhalters bei einem ersten Längssteg und einem zweiten Abschnitt des Werkstückhalters bei einem zweiten Längssteg aufgenommen, wobei die Bearbeitung insbesondere eine Drehung des Werkstückhalters um die lokale Schwenkachse um zumindest 120° umfasst, so dass die Werkstücke an zwei voneinander abgewandten Seiten bearbeitet werden können. Üblicherweise umfasst eine Bearbeitung an zwei voneinander abgewandten Seiten eine Schwenkbewegung von zumindest 180°.

Auf diese Weise können zwei voneinander abgewandte Seiten des Werkstücks nacheinander der Werkzeugspindel zugewandt werden. Die Werkstücke können direkt freihängend zwischen dem ersten Abschnitt und dem zweiten Abschnitt des Werkstückhalters aufgenommen werden. Es ist auch vorstellbar, die Werkstücke auf einer Palette zu fixieren und die Palette direkt und freihängend zwischen dem ersten Abschnitt und dem zweiten Abschnitt des Werkstückhalters anzuordnen.

Gemäß einer weiteren Ausgestaltung der Verwendung weist die Werkzeugmaschine zwei zueinander parallel orientierte Werkzeugspindeln und zwei zueinander parallel orientierte Werkstückhalter auf, deren lokale Schwenkachsen orthogonal zur globalen Schwenkachse orientiert sind. Die beiden Werkzeugspindeln können mechanisch oder elektronisch miteinander gekoppelt (synchronisiert) sein, um zwei Werkstücke simultan zu bearbeiten.

Die vorliegende Offenbarung bezieht sich ferner auf ein Verfahren zur Bearbeitung von Werkstücken, das analog zur offenbarungsgemäßen Verwendung die Bereitstellung einer einschlägigen offenbarungsgemäßen Werkzeugmaschine umfasst. Das Verfahren umfasst die Erzeugung einer Relativbewegung zwischen dem zumindest einen Werkstückhalter und der zumindest einen zugeordneten Werkzeugspindel in zumindest drei Achsen. In einer beispielhaften Ausgestaltung umfasst das Verfahren die Erzeugung einer Relativbewegung zwischen dem zumindest einen Werkstückhalter und der zumindest einen zugeordneten Werkzeugspindel in fünf Achsen, umfassend drei translatorische Achsen (X, Y, Z) und eine lokale Schwenkachse (B-Achse) sowie eine globale Schwenkachse (A-Achse). Die Schwenkwinkel um die globale Schwenkachse (A-Achse) können limitiert sein und beispielsweise betragsmäßig weniger als 30° in Bezug auf eine Neutrallage (horizontale Orientierung der lokalen Schwenkachse) umfassen.

Gemäß einer weiteren beispielhaften Ausgestaltung umfasst das Verfahren ein Beladen der Werkzeugmaschine mit zumindest einem zu bearbeitenden Werkstück. Dies umfasst eine Aufnahme und Fixierung des Werkstücks am Werkstückhalter. Gemäß einer weiteren beispielhaften Ausgestaltung umfasst das Verfahren nach der Bearbeitung ein Entladen der Werkzeugmaschine, umfassend ein Lösen und Abführen des Werkstücks vom Werkstückhalter.

Es versteht sich, dass die vorstehend genannten und die nachstehend noch zu erläuternden Merkmale der Offenbarung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile ergeben sich aus der nachfolgenden Beschreibung mehrerer bevorzugter Ausführungsbeispiele unter Bezugnahme auf die Zeichnungen. Es zeigen:
- Fig. 1:: eine perspektivische Ansicht einer Ausgestaltung einer Werkzeugmaschine;
- Fig. 2: eine Schnittansicht durch die Werkzeugmaschine gemäß Fig. 1;
- Fig. 3:: eine Schnittansicht durch einen Schwenkträger zur Aufnahme von Werkstücken, wobei die Ansichtsorientierung der Ansichtsorientierung gemäß Fig. 2 entspricht;
- Fig. 4:: eine Schnittansicht durch einen weiteren Schwenkträger in einer von Fig. 3 abweichenden Ansichtsorientierung;
- Fig. 5:: eine Schnittansicht durch einen weiteren Schwenkträger in einer Ansichtsorientierung gemäß Fig. 4;
- Fig. 6:: eine Schnittansicht durch einen weiteren Schwenkträger in einer Ansichtsorientierung gemäß Fig. 4;
- Fig. 7:: eine Schnittansicht durch einen weiteren Schwenkträger in einer Ansichtsorientierung gemäß Fig. 4;
- Fig. 8:: eine Draufsicht auf eine weitere Ausgestaltung einer Werkzeugmaschine; und
- Fig. 9:: eine beispielhafte perspektivische Ansicht eines Werkstücks.

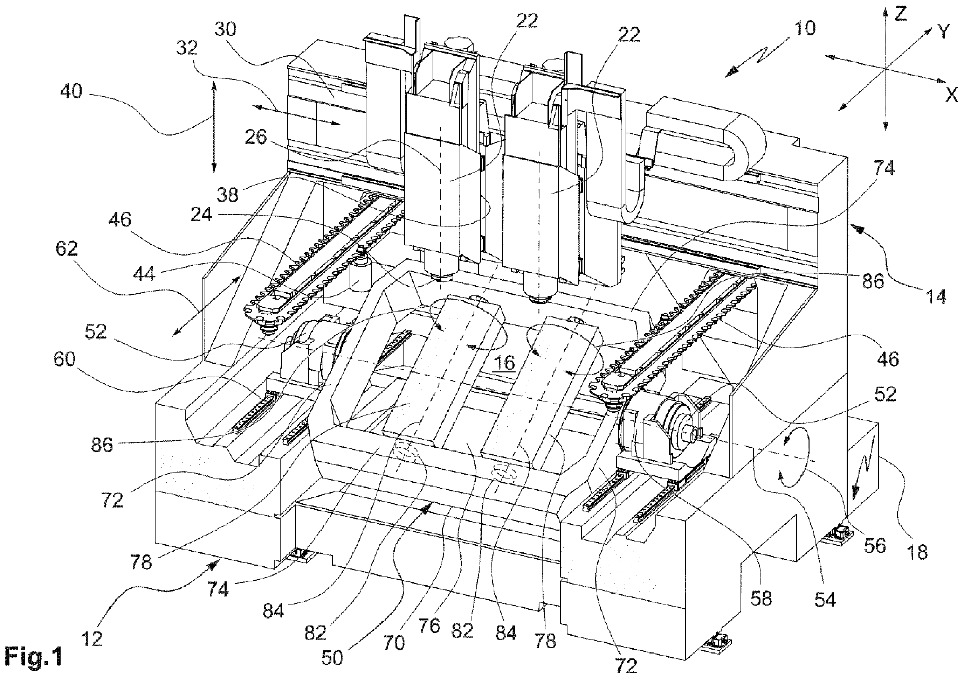

Fig. 1 veranschaulicht anhand einer perspektivischen Darstellung die Grundstruktur einer insgesamt mit 10 bezeichneten Werkzeugmaschine. In Fig. 1 ist die Werkzeugmaschine 10 als sogenannte Portal-Maschine (mit stehendem Portal) gestaltet. Dies ist nicht einschränkend zu verstehen. Es sind auch Gestaltungen in Gantry-Bauweise (mit Fahrbalken), in Fahrständerbauweise, oder dergleichen vorstellbar.

In Fig. 1 und weiteren der hiesigen Figuren ist aus Veranschaulichungsgründen ein kartesisches Koordinatensystem X-Y-Z dargestellt. Das Koordinatensystem dient zur Veranschaulichung grundlegender Orientierungen und Bewegungsachsen der Werkzeugmaschine 10 sowie von deren Komponenten. Eine mit X bezeichnete Achse kennzeichnet allgemein eine Längserstreckung (seitliche Erstreckung). Eine mit Y bezeichnete Achse kennzeichnet allgemein eine Tiefenerstreckung. Im Ausführungsbeispiel definieren die Achsen X und Y gemeinsam eine Horizontalebene. Eine mit Z bezeichnete Achse kennzeichnet allgemein eine Höhenerstreckung. Das Koordinatensystem X-Y-Z dient in erster Linie zur Veranschaulichung und ist nicht in einschränkender Weise zu verstehen. Es versteht sich, dass auch andere Koordinatensysteme zur Beschreibung der Werkzeugmaschine 10 und deren Komponenten nutzbar sind. Der Fachmann kann entsprechende Transformationen vornehmen. Nachfolgend wird in weiteren der Figuren auf das Koordinatensystem X-Y-Z zurückgegriffen, um zumindest beispielhafte Orientierungen und Ausrichtungen zu veranschaulichen.

Im Ausführungsbeispiel gemäß Fig. 1 weist die Werkzeugmaschine 10 ein Gestell 12 auf, das auch als Basis oder Bett bezeichnet werden kann. Das Gestell 12 trägt ein Portal 14. Bei dem Portal 14 handelt es sich um ein Festportal bzw. ein stehendes Portal. Das Gestell 12 und weitere Komponenten der Werkzeugmaschine 10 definieren einen Arbeitsraum 16, in dem Werkstücke bearbeitet werden können, insbesondere mittels spanender Bearbeitung. Der Arbeitsraum 16 ist während der Bearbeitung üblicherweise geschlossen, etwa durch geeignete Verkleidungen, Türen und dergleichen. Aus Veranschaulichungsgründen ist in Fig. 1 keine Arbeitsraumverkleidung dargestellt. Ähnliches gilt für eine Einhausung der Werkzeugmaschine, die in Fig. 1 aus Veranschaulichungsgründen nicht gezeigt ist.

Die Werkzeugmaschine 10 weist ferner eine Steuereinheit 18 auf, die zur Steuerung des Betriebs der Werkzeugmaschine 10 dient. Die Steuereinheit 18 sorgt für die erforderlichen Bewegungen der beteiligten Komponenten. Die Steuereinheit 18 kann auch als NC-Steuereinheit bezeichnet werden. Die Werkzeugmaschine 10 kann eine lokale Steuereinheit 18 aufweisen. Es ist grundsätzlich auch eine Kopplung der Werkzeugmaschine 10 mit einer entfernten Steuereinheit vorstellbar.

Im Ausführungsbeispiel gemäß Fig. 1 weist die Werkzeugmaschine zwei zueinander parallel orientierte Werkzeugspindeln 22 auf, die am Portal 14 gelagert sind. Die Werkzeugspindeln 22 sind vertikal orientiert. Die Werkzeugspindeln 22 weisen jeweils einen Werkzeughalter 24 zur Aufnahme eines Werkzeugs auf, der um eine vertikale Achse 26 rotierbar ist. Die Werkzeugspindeln 22 sind am Portal 14 an einer X-Führung 30 horizontal verfahrbar, vergleiche einen mit 32 bezeichneten Doppelpfeil, der eine erste horizontale Richtung (parallel zur X-Richtung) bezeichnet. Die Werkzeugspindeln 22 sind ferner an einer Z-Führung 38 vertikal verfahrbar, vergleiche einen mit 40 bezeichneten Doppelpfeil, der eine vertikale Richtung (parallel zur Z-Richtung) bezeichnet.

Es versteht sich, dass die Werkzeugmaschine 10 in beispielhaften Ausgestaltungen lediglich eine Werkzeugspindel 22 aufweisen kann. Zwei Werkzeugspindeln 22 erlauben die simultane Bearbeitung mehrere Werkstücke. Die beiden Werkzeugspindeln 22 können mechanisch fest miteinander gekoppelt sein. Es ist auch vorstellbar, die beiden Werkzeugspindel 22 elektronisch (steuerungstechnisch) über die Steuereinheit 18 miteinander zu koppeln. In beiden Fällen kann sich eine synchrone Bewegung der beiden Werkzeugspindeln 22 ergeben, so dass zwei oder mehr Werkstücke gleichzeitig bearbeitet werden können.

In der beispielhaften Ausgestaltung gemäß Fig. 1 ist jeder Werkzeugspindel 22 ein Werkzeugmagazin 46 zugeordnet, das Werkzeuge 44 trägt. Die Werkzeuge 44 können am/im Werkzeughalter 24 der Werkzeugspindeln 22 aufgenommen werden. Der Werkzeugwechsel erfolgt beispielsweise im Pick-up-Verfahren.

Zur Aufnahme von Werkstücken ist im Arbeitsraum 16 ein Schwenkträger 50 angeordnet. Der Schwenkträger 50 ist zwischen zwei zueinander konzentrischen Schwenklagern 52 angeordnet, die auch als globale Schwenklager 52 bezeichnet werden können. Die globalen Schwenklager 52 definieren eine globale Schwenkachse 54. Auf diese Weise wird eine sogenannte A-Achse bereitgestellt, vergleiche einen mit 56 bezeichneten gekrümmten Doppelpfeil. Der Schwenkträger 50 kann zumindest innerhalb eines begrenzten Schwenkbereichs um die globale Schwenkachse 54 verschwenkt werden. Im Ausführungsbeispiel gemäß Fig. 1 ist zumindest eines der beiden globalen Schwenklager 52 mit einem Antrieb 58 zu Erzeugung der globalen Schwenkbewegung gekoppelt.

Die globalen Schwenklager 52 sind im Ausführungsbeispiel gemäß Fig. 1 entlang von Y-Führungen 60 translatorisch am Gestell 12 verfahrbar, vergleiche einen mit 62 bezeichneten Doppelpfeil, der eine zweite horizontale Richtung (parallel zur Y-Richtung) bezeichnet. Damit kann der Schwenkträger 50 mitsamt der globalen Schwenkachse 54 horizontal verfahren werden. Durch die Bewegung der Werkzeugspindeln 22 in der ersten horizontalen Richtung 32 und der vertikalen Richtung 40 sowie die Bewegung des Schwenkträgers 50 entlang der zweiten horizontalen Richtung 62 können insgesamt drei translatorische Achsen (X, Y, Z) bereitgestellt werden. Die Schwenkbewegung des Schwenkträgers 50 um die globale Schwenkachse 54 stellt eine rotatorische Achse (A-Achse 56) bereit.

Der Schwenkträger 50 umfasst einen Rahmen 70, der im Wesentlichen durch zwei Querstege 72 und zwei Längsstege 74 gebildet ist, die eine Werkstückhalteöffnung 76 umgeben. Damit weist der Schwenkträger 50 einen etwa rechteckigen Grundriss auf. Die beiden Querstege 72 sind in der ersten horizontalen Richtung 32 (X-Richtung) voneinander beabstandet. Zumindest in einer Neutralstellung des Schwenkträgers 50 sind die beiden Längsstege 74 in der zweiten horizontalen Richtung 62 (Y-Richtung) voneinander beabstandet. In der Neutralstellung ist der Schwenkträger 50 mit seinem Rahmen 70 etwa parallel zu einer durch die beiden horizontalen Achsen X und Y gebildeten Horizontalebene orientiert.

Die beiden Querstege 72 sind an ihren voneinander abgewandten Seiten jeweils an einem der globalen Schwenklager 52 um die globale Schwenkachse 54 verschwenkbar gelagert. Die beiden Längsstege 74 überbrücken den Abstand zwischen den beiden Querstegen 72 in der ersten horizontalen Richtung 32 (X-Richtung).

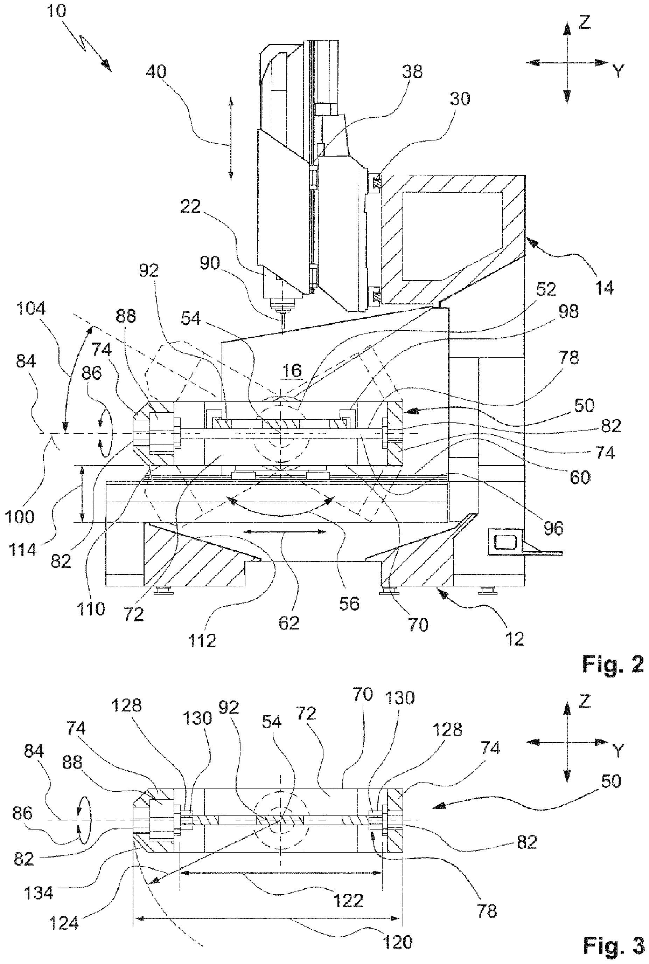

In der Werkstückhalteöffnung 76 des Rahmens 70 sind im Ausführungsbeispiel gemäß Fig. 1 zwei Werkstückhalter 78 angeordnet. Die Werkstückhalter 78 sind zwischen einander zugewandten Seiten der beiden Längsstege 74 angeordnet. Die Werkstückhalter 78 erstrecken sich zwischen zwei (lokalen) Schwenklagern 82, vergleiche auch Fig. 2. Zwei einander gegenüberliegend angeordnete Schwenklager 82 der Längsstege 74 bilden jeweils eine lokale Schwenkachse 84, um die die Werkstückhalter 78 schwenkbar sind. Die jeweilige Schwenkachse 84 kann auch als B-Achse bezeichnet werden, vergleiche mit 86 bezeichnete gekrümmte Doppelpfeile. Damit können insgesamt drei translatorische Achsen (X, Y, Z) und zwei rotatorische Achsen (A, B) bereitgestellt werden, so dass eine Bearbeitung von Werkstücken in fünf Achsen ermöglicht ist.

Das Ausführungsbeispiel gemäß Fig. 1 zeigt eine Gestaltung der Werkzeugmaschine 10 mit zwei Werkzeugspindeln 22 und zwei diesen zugeordneten Werkstückhaltern 78 am oder im Schwenkträger 50. Weil der Schwenkträger 50 rahmenartig gestaltet ist und eine große Werkstückhalteöffnung 76 umgibt, können dort zwei Werkstücke auf den Werkstückhaltern 78 befestigt und für die Bearbeitung bereitgestellt werden. Die Werkstücke können mit ihrer Längserstreckung etwa parallel zu den lokalen Schwenkachsen 84 ausgerichtet werden. Daher können zwei Werkstücke günstig nebeneinander angeordnet und gemeinsam (gegebenenfalls simultan) bearbeitet werden.

Fig. 2 zeigt exemplarisch einen seitlichen Schnitt durch die Werkzeugmaschine 10, vergleiche zu Orientierung auch das Koordinatensystem Y-Z in Fig. 2. Eine durch die Y-Achse und die Z-Achse definierte Vertikalebene ist parallel zur Ansichtsorientierung. Die Ansichtsebene in Fig. 2 schneidet eine lokale Schwenkachse 84 durch den Schwenkträger 50, so dass auch dessen Rahmen 70 im Bereich der Längsstege 74 geschnitten ist.

Das Gestell 12 mit dem Portal 14 definiert einen Arbeitsraum 16, in dem der Schwenkträger 50 um die globale Schwenkachse 54 (senkrecht zur Ansichtsorientierung in Fig. 2) verschwenkbar ist, vergleiche den gekrümmten Doppelpfeil 56. Denkbare Schwenkposition des Schwenkträgers 50 um die globale Schwenkachse 54 sind in Fig. 2 gestrichelt dargestellt.

Das in Fig. 2 durch den Quersteg 72 teilweise verdeckte globale Schwenklager 52 ist entlang der Y-Führung 60 horizontal verfahrbar, vergleiche den Doppelpfeil 62. Die Werkzeugspindel 22 ist in der vertikalen Richtung 40 und in einer horizontalen Richtung (in Fig. 2 senkrecht zur Ansichtsebene, vergleiche auch den Doppelpfeil 32 in Fig. 1) verfahrbar. Eine globale Schwenkbewegung des Schwenkträgers 50 um die globale Schwenkachse 54 und eine lokale Schwenkbewegung des Werkstückhalters 78 um die lokale Schwenkachse 84 komplettieren die möglichen Bewegungsfreiheitsgrade bei der Bearbeitung.

Die Bewegung um die lokale Schwenkachse 84 wird durch den gekrümmten Doppelpfeil 86 (B-Achse) veranschaulicht. Zumindest eines der beiden zueinander konzentrischen und einander gegenüberliegenden, an den voneinander beabstandeten Längsstegen 74 angeordneten lokalen Schwenklager 82 ist mit einem Schwenkantrieb 88 zur Erzeugung der Schwenkbewegung um die lokale Schwenkachse 84 gekoppelt.

Der Werkstückhalter 78 erstreckt sich zwischen den beiden Schwenklagern 82. Am Werkstückhalter 78 ist ein Werkstück 92 aufgenommen, das mit einem an der Werkzeugspindel 22 gehaltenen, rotatorisch antreibbaren Werkzeug 90 bearbeitet werden kann. Im Ausführungsbeispiel gemäß Fig. 2 bildet der Werkstückhalter 78 eine lokale Schwenkbrücke 96 zwischen den beiden Längsstegen 74 des Rahmens 70 aus. Es gibt also gemäß diesem Ausführungsbeispiel eine direkte Verbindung zwischen den beiden gegenüberliegenden Schwenklagern 82. Die Schwenkbrücke 96 dient zur Aufnahme zumindest eines Werkstücks 92, wobei die Schwenkbrücke 96 mitsamt dem Werkstück 92 um die lokale Schwenkachse 84 verschwenkbar ist. Zur Fixierung des Werkstücks 92 dienen Spannelemente 98, beispielsweise Klemmstücke, Niederhalter oder dergleichen.

Die lokale Schwenkachse 84 definiert im Ausführungsbeispiel gemäß Fig. 2 gemeinsam mit der globalen Schwenkachse 54 eine Schwenkebene 100, die die Querstege 72 und die Längsstege 74 schneidet. Im Ausführungsbeispiel gemäß Fig. 2 halbiert die Schwenkebene 100 den Rahmen 70 des Schwenkträgers 50. Ferner liegt im Ausführungsbeispiel auch die lokale Schwenkbrücke 96 in der Schwenkebene 100. Es ergibt sich eine besonders flache Gestaltung. Der Werkstückhalter 78 ist innerhalb des Rahmens 70 angeordnet, zumindest bei einer Betrachtung von außen entlang der lokalen Schwenkachse 84. Somit können flacher Werkstücke 92 günstig ausgerichtet und für die Bearbeitung bereitgestellt werden.

Die in Fig. 2 gezeigte Gestaltung erlaubt gegebenenfalls nur begrenzte Schwenkwinkel für den Schwenkträger 50 um die globale Schwenkachse 54, vergleiche den gekrümmten Doppelpfeil 104 in Fig. 2. Damit eignet sich diese Gestaltung insbesondere für Werkstücke 92, bei denen die Bearbeitung in zumindest einer der beiden Schwenkachsen (vergleiche die Doppelpfeile 56, 86) nur begrenzte Schwenkwinkel erforderlich macht.

Umgekehrt erlaubt die Begrenzung des Schwenkwinkel des 104 eine günstige Ausnutzung einer gegebenen Höhe (Z-Erstreckung) und Tiefe (Y-Erstreckung) des Arbeitsraums 16. Wenn es nämlich gar nicht erforderlich ist, den Schwenkträger 50 vollständig (180° oder Vielfache davon) um die globale Schwenkachse zu rotieren, kann die Erstreckung des Schwenkträgers 50 in der Y-Richtung (zweite horizontale Richtung 62) vergrößert werden. Damit steigt die Eignung zur Bearbeitung relativ großflächiger Werkstücke 92 mit nur begrenzter Höhenerstreckung.

In Fig. 2 ist eine Unterseite des Schwenkträgers 50 mit 110 bezeichnet. Eine Begrenzung des Arbeitsraums 16 ist mit 112 bezeichnet. Hierbei handelt es sich beispielsweise um einen Abschnitt des Gestells 12, einen Spänetrichter, allgemein um eine Arbeitsraumverkleidung oder dergleichen. Ein (vertikaler) Abstand zwischen der Unterseite 110 des Schwenkträgers 50 und der Begrenzung 112 des Arbeitsraums 16 ist in Fig. 2 mit 114 bezeichnet. Der Abstand 114 ist geringer als der Abstand, der erforderlich wäre, um eine vollständige Rotation des Schwenkträgers 50 um die globale Schwenkachse 54 zu erlauben.

Fig. 3 basiert auf Fig. 2 und veranschaulicht eine weitere denkbare Konfiguration anhand eines Schnitts durch den Schwenkträger 50. In Fig. 3 veranschaulichen die Bezugszeichen 120 und 122 Abmessungen des Schwenkträgers 50 in der zweiten horizontalen Richtung 62 (Y-Richtung). Das Bezugszeichen 120 beschreibt eine Quererstreckung des Schwenkträgers 50. Das Bezugszeichen 122 beschreibt eine lichte Weite zwischen den einander zugewandten Seiten der Längsstege 74 bzw. zwischen den einander zugewandten lokalen Schwenklagern 82. In einer beispielhaften Ausgestaltung sollte zumindest bei der in Fig. 3 gewählten Befestigungsart für das Werkstück 92 die maximale Länge des Werkstücks 92 nicht größer als die lichte Weite 122 sein. Dies ist jedoch nicht einschränkend zu verstehen. In den Figuren 2 und 3 ist lediglich eines der beiden lokalen Schwenklager 82 direkt mit einem Antrieb 88 gekoppelt. In diesem Bereich ist auch der Längssteg 74 aufgedickt. Ein sich bei der Rotation des Schwenkträgers 50 um die globale Schwenkachse 54 ergebender Störkreisradius ist in Fig. 3 mit 124 bezeichnet.

Wenn für die Bearbeitung der Werkstücke 92 nur geringe Schwenkwinkel 104 des Schwenkträgers 50 erforderlich sind, kann der effektive Abstand 114 zwischen den Schwenkträger 50 und der Begrenzung 112 des Arbeitsraums reduziert werden, beispielsweise in Relation zur (halben) Quererstreckung 120 und/oder in Relation zum Störkreisradius 124. Der effektive Abstand 124 ist beispielsweise ein Abstand, der eine ungünstige Y-Position des Schwenkträgers 50 entlang der zweiten horizontalen Richtung 62 berücksichtigt. Hierbei ist zu beachten, dass üblicherweise eine (untere) Begrenzung 112 des Arbeitsraums 16 keine Ebene, horizontale Fläche ist, sondern geneigte Abschnitte umfasst.

Wenn nur kleine Schwenkwinkel 104 erforderlich sind, kann das Abstandsmaß 114 reduziert werden. Damit könnte die globale Schwenkachse 54 weiter nach unten in Richtung auf eine Basis des Gestells 12 verlagert werden. Alternativ oder zusätzlich kann die Quererstreckung 120 und damit die lichte Weite 122 des Schwenkträgers 50 vergrößert werden. Damit kann für bestimmte Werkstücke 92 der Arbeitsraum 16 optimal ausgenutzt werden, um die Produktivität zu erhöhen.

Am Schwenkträger 50 ist der Werkstückhalter 78 ausgebildet, der jedoch in der Gestaltung gemäß Fig. 3 zwei voneinander beabstandete Abschnitte 128 aufweist, die jeweils einem der beiden einander gegenüberliegenden lokalen Schwenklager 82 zugeordnet sind. Mit anderen Worten bildet also der Werkstückhalter 78 im Ausführungsbeispiel gemäß Fig. 3 keine direkte Verbindung (vergleiche die lokale Schwenkbrücke 96 in Fig. 2) zwischen den Schwenklagern 82 der beiden voneinander beabstandeten Längsstege 74 aus. Stattdessen kann ein Werkstück 92 freihängend zwischen den beiden Abschnitten 128 befestigt werden. Zur Befestigung dienen Spannelemente 128, beispielsweise Spannfutter oder dergleichen. Das freihängende Werkstück 92 selbst bildet also eine Verbindung zwischen den beiden Schwenklagern 82. Im Vergleich dazu liegt im Ausführungsbeispiel gemäß Fig. 2 das dortige Werkstück 92 zumindest abschnittsweise auf der lokalen Schwenkbrücke 96 auf.

Bei der beispielhaften Ausgestaltung gemäß Fig. 3 schneidet die lokale Schwenkachse 84 das Werkstück 92. Eine solche Anordnung kann grundsätzlich auch mit der Gestaltung gemäß Fig. 2 erzielt werden, wenn die lokale Schwenkbrücke 96 entsprechend gekröpft ist.

In den Figuren 2 und drei befindet sich der Schwenkträger 50 jeweils in der Neutralstellung, in der die lokale Schwenkachse 84 horizontal orientiert ist. Der Schwenkträger 50 gemäß den Figuren 2 und 3 weist ferner eine Schräge 134 an zumindest einer Außenkante zumindest eines der Längsstege 74 auf. Die Schräge 134 reduziert den Störkreisradius 124, so dass der gegebene Bauraum 16 noch besser nutzbar ist.

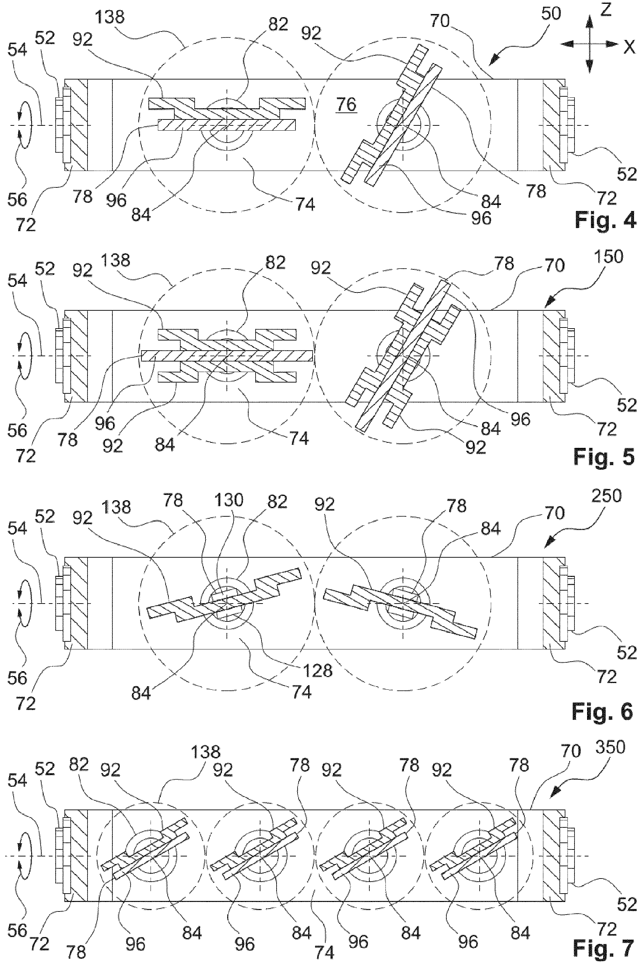

Ergänzend zu den bisher anhand der Figuren 1-3 veranschaulichten Ausgestaltungen zeigen die Figuren 4-7 anhand geschnittener frontaler Ansichten weitere beispielhafte Ausgestaltungen von Schwenkträgern 50, 150, 250, 350, die im Arbeitsraum 16 der Werkzeugmaschine 10 positionierbar sind. Vergleiche zur Ansichtsorientierung das Koordinatensystem X-Z in Fig. 4, wobei für die Darstellung davon ausgegangen wird, dass die Schwenkträger 50, 150, 250, 350 hinsichtlich ihrer Schwenkbewegung um die globale Schwenkachse 54 jeweils in der Neutralstellung sind. Die Z-Achse und die jeweilige lokale Schwenkachse 84 sind in den Figuren 4-7 senkrecht zur Ansichtsebene orientiert. Die Schnittebene schneidet jeweils die globale Schwenkachse 54.

Der Schwenkträger 50 gemäß Fig. 4 weist in grundsätzlich zuvor bereits veranschaulichter Weise einen Rahmen 70 mit Querstegen 72 und Längsstegen 74 auf, die eine Werkstückhalteöffnung 76 umgeben. Die Querstege 72 sind jeweils mit einem globalen Schwenklager 52 gekoppelt, die sich ergebende globale Schwenkachse 54 (A-Achse 56) schneidet die Ansichtsebene. Am Rahmen 70 sind zwei Werkstückhalter 78 angeordnet, die jeweils ein Werkstück 92 tragen und um eine lokale Schwenkachse 84 verschwenkbar sind. Ein sich ergebender maximaler Störkreis ist in Fig. 4 mit 138 bezeichnet. Solange der Werkstückhalter 78 und das Werkstück 92 innerhalb des Störkreises 138 ausgebildet sind, können zwei nebeneinander angeordnete Werkstückhalter 78 mit Werkstücken 92 frei um die lokalen Schwenkachsen 84 rotiert werden. Die Werkstückhalter 78 in Fig. 4 sind als lokale Schwenkbrücken 96 gestaltet und schwenkbar an den jeweiligen lokalen Schwenklagern 82 gelagert. Vergleiche hierzu die insoweit ähnliche Gestaltung gemäß Fig. 2 mit um 90° gekippter Ansichtsorientierung. Die Werkstücke 92 können frei um die lokale Schwenkachse 84 rotiert werden, so dass eine große räumliche Freiheit für die Bearbeitung gegeben ist.

Der Schwenkträger 150 gemäß Fig. 5 ist dem Schwenkträger 50 gemäß Fig. 4 grundsätzlich sehr ähnlich gestaltet. Die Werkstückhalter 78 sind ebenso als lokale Schwenkbrücken 96 gestaltet, die sich zwischen zwei einander gegenüberliegenden lokalen Schwenklagern 82 erstrecken. Die Schwenkbrücken 96 sind jedoch an zwei voneinander abgewandten Seiten, beispielsweise an zwei voneinander abgewandten Flachseiten, zur Aufnahme jeweils eines oder mehrere Werkstücke 92 ausgebildet. Auf diese Weise können an einem Werkstückhalter 78 mehrere Werkstücke 92 bereitgestellt werden, die durch eine Schwenkbewegung um die lokale Schwenkachse 84 wechselseitig oder nacheinander in eine Bearbeitungsposition gebracht werden können.

Alternativ kann eine grundsätzlich ähnliche Ausgestaltung auch durch Bereitstellung einer Palette realisiert werden, die zwei voneinander abgewandte Seiten aufweist, an denen jeweils ein Werkstück 92 aufnehmbar ist. Eine solche Palette könnte dann freihängend am Werkzeughalter 78 zwischen den beiden einander zugewandt lokalen Schwenklagern 82 aufgenommen werden. Es bedarf also keiner lokalen Schwenkbrücke 96, die die beiden lokalen Schwenklager 82 direkt miteinander verbindet. Mit anderen Worten können also zwei Werkstücke 92 mit ihrer Palette freihängend aufgenommen werden.

Die Gestaltung des Schwenkträgers 250 gemäß Fig. 6 orientiert sich an der bereits in Fig. 3 veranschaulichten Ausgestaltung mit einem direkt zwischen zwei Abschnitten 130 des Werkstückhalters 78 aufgenommenen Werkstück 92. Es ist also bei den Ausführungsbeispiel gemäß Fig. 6 keine Schwenkbrücke 96 verbaut. Der Werkstückhalter 78 verbindet die beiden einander zugewandten lokalen Schwenklager 82 nicht direkt. Stattdessen weist der Werkstückhalter 78 gemäß Fig. 6 voneinander beabstandete Abschnitte 128 mit Spannelementen 130 auf, wobei jeweils einer der beiden Abschnitte 128 einem der beiden lokalen Schwenklager 82 zugeordnet ist. Auf diese Weise ist ein Großteil der Oberfläche des Werkstücks 92 für die Bearbeitung zugänglich, die gilt auch für voneinander abgewandte Seiten.

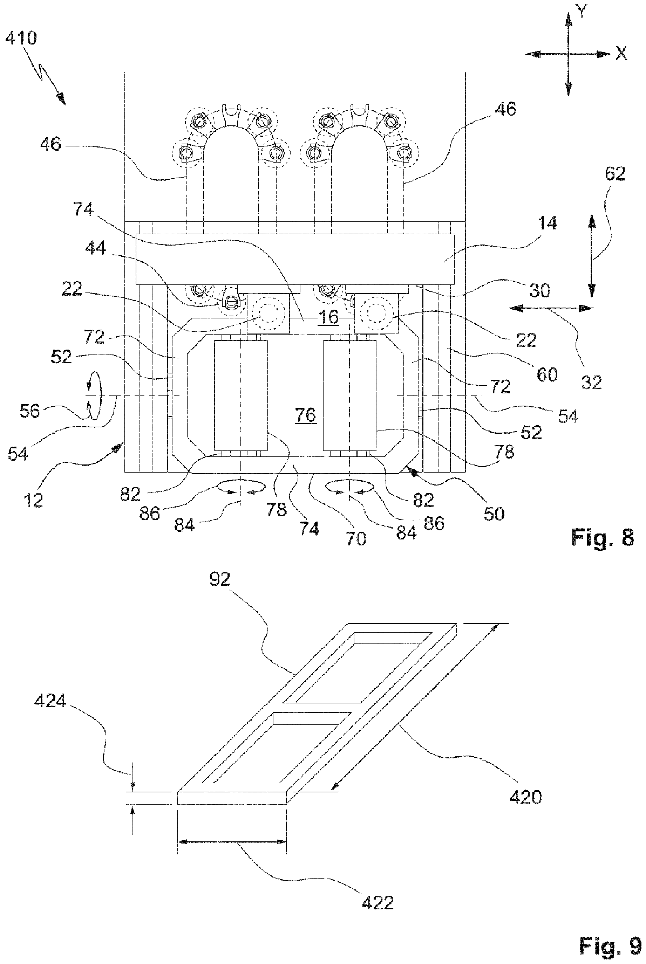

Die Gestaltung des Schwenkträgers 350 gemäß Fig. 7 ist der Gestaltung des Schwenkträgers 50 gemäß Fig. 4 sehr ähnlich. Jedoch weist der Schwenkträger 350 insgesamt vier zueinander parallele lokale Schwenkachsen 84 auf, die jeweils durch entsprechende Paarungen lokaler Schwenklager 82 gebildet werden. Demgemäß sind vier parallel zueinander orientierte Werkstückhalter 78 verbaut, die jeweils zumindest ein Werkstück 92 aufnehmen können. Eine Gestaltung gemäß Fig. 7 bietet sich etwa dann an, wenn die Werkstücke 92 hinsichtlich ihrer Ausdehnung in der Ansichtsebene klein genug für die sich ergebenden kleineren maximalen Störkreise 138 sind. Eine Bearbeitung der Werkstücke 92 kann mit einer Werkzeugmaschine 10 mit zwei Werkzeugspindeln 22 (zum Beispiel gemäß Fig. 1 oder Fig. 8) erfolgen, wobei die beiden Werkzeugspindeln 22 beispielsweise sequenziell jeweils zwei der vier Werkstücke 92 bearbeiten. Es ist jedoch grundsätzlich auch die Nutzung einer Werkzeugmaschine mit vier Werkzeugspindeln vorstellbar.

Fig. 8 veranschaulicht anhand einer schematischen Draufsicht eine insgesamt mit 410 bezeichnete Werkzeugmaschine, vergleiche auch das Koordinatensystem X-Y zur Veranschaulichung der Ansichtsorientierung. Die Werkzeugmaschine 410 ist als sogenannte Gantry-Maschine gestaltet. Hinsichtlich der grundsätzlichen Komponenten der Werkzeugmaschine 410 wird zur Vermeidung von Wiederholungen auf die umfassende Beschreibung der Werkzeugmaschine 10 anhand der Figuren 1 und 2 verwiesen. Die Gestaltung der Werkzeugmaschine 10 als Gantry-Maschine umfasst eine Verfahrbarkeit der Werkzeugspindeln 22 in drei translatorischen Achsen.

Dies umfasst eine senkrecht zur Ansichtsebene gemäß Fig. 8 orientierte vertikale Achse (vergleiche die Z-Achse bzw. die vertikale Richtung 42 in Fig. 1). im Gegensatz zur Werkzeugmaschine 10 gemäß den Figuren 1 und 2 ist das Portal 14 der Werkzeugmaschine 410 gemäß Fig. 8 kein fest mit dem Gestell 12 gekoppeltes Portal, sondern ein Fahrportal. Das Portal 14 kann anhand von Y-Führungen 60 entlang der zweiten horizontalen Richtung (Y-Richtung) am Gestell 12 verfahren werden, vergleiche den Doppelpfeil 62. Ferner können die Werkstückspindeln 22 in der ersten horizontalen Richtung (X-Richtung) relativ zum Gestell 12 an X-Führungen 30 am Fahrportal 14 verfahren werden, vergleiche den Doppelpfeil 32.

Die globale Schwenkachse 54 des Schwenkträgers 50 ist Hinsichtlich einer translatorischen Bewegung fix (unbeweglich) am Gestell 12 der Werkzeugmaschine 14 festgelegt. In der Draufsicht gemäß Fig. 8 ist der Schwenkträger 50 mit dem Rahmen 70 in der Neutralstellung. Die sich ergebende Form des Schwenkträgers 50 ähnelt beispielhaft einem Fahrradpedal. Am Schwenkträger 50 sind zwischen den beiden Längsstegen 74 zwei Werkstückhalter 78 mit zueinander parallelen lokalen Schwenkachsen 84 aufgenommen. Die beiden Querstege 72 sind jeweils mit einem globalen Schwenklager 52 gekoppelt. Auf diese Weise können auch mit der Werkzeugmaschine 410 gemäß Fig. 8 insgesamt drei translatorische Bewegungsfreiheitsgrade (X, Y, Z) und zwei rotatorische Bewegungsfreiheitsgrade (A-Achse, B-Achse) für eine Bearbeitung in fünf Achsen bereitgestellt werden. Auch bei der Gestaltung gemäß Fig. 8 lässt sich der gegebene Arbeitsraum 16 bei bestimmten Arten von Werkstücken günstig nutzen, wenn die für die Bearbeitung erforderliche Bewegung (vergleiche den gekrümmten Doppelpfeil 56) ausgehend von der Neutrallage lediglich begrenzte Schwenkwinkel erforderlich macht.

Fig. 9 veranschaulicht lediglich beispielhaft eine denkbare Gestaltung eines Werkstücks 92, das sich zur Bearbeitung in einer Werkzeugmaschine 10, 410 gemäß den Prinzipien der vorliegenden Offenbarung eignet. Das Werkstück 92 ist relativ flach gestaltet. Das Werkstück 92 weist eine Längserstreckung 420, eine Quererstreckung 422 sowie eine Höhenerstreckung 424 auf. Die Längserstreckung 420 und gegebenenfalls auch die Quererstreckung 422 ist/sind deutlich größer als die Höhenerstreckung 424. Das Werkstück 92 weist insgesamt eine ausgeprägte flächige Erstreckung auf. Ein solches Werkstück 92 kann nun mit seiner Längserstreckung 420 etwa parallel zur Längsachse 84 ausgerichtet und an einem der Werkstückhalter 78 aufgenommen werden. Da die Quererstreckung 422 kleiner als die Längserstreckung 424 ist, können gegebenenfalls mehrere Werkstücke 92 nebeneinander an/in einem Schwenkträger 50, 150, 250, 350 angeordnet und unter Nutzung von vier oder fünf Bewegungsfreiheitsgraden bearbeitet werden. Dies erlaubt komplexe Bearbeitungen.

## Patentansprüche

1. Werkzeugmaschine (10, 410) zur Bearbeitung von Werkstücken (92), die Folgendes aufweist:
- ein Gestell (12), das zumindest eine vertikal orientierte Werkzeugspindel (22) und einen um eine globale Schwenkachse (54) schwenkbaren Schwenkträger (50) trägt,
wobei die zumindest eine Werkzeugspindel (22) und der Schwenkträger (50) relativ zueinander verfahrbar sind, um Werkstücke (92) in einem Arbeitsraum (16) zu bearbeiten, umfassend zumindest eine Bewegung der Werkzeugspindel (22) relativ zum Gestell (12) in einer ersten horizontalen Richtung (32) und einer vertikalen Richtung (40),
wobei der Schwenkträger (50) Folgendes aufweist:
- einen vorzugsweise an seinem Umfang geschlossenen Rahmen (70), der zwei Querstege (72) und zwei Längsstege (74) aufweist und eine Werkstückhalteöffnung (76) umgibt,
- zumindest einen Werkstückhalter (78) zur Aufnahme eines Werkstücks (92) am Rahmen (70),
wobei die zwei Querstege (72) in der ersten horizontalen Richtung (32) voneinander beabstandet sind, die parallel zur globalen Schwenkachse (54) ist,
wobei die zwei Querstege (72) an ihren voneinander abgewandten Seiten jeweils schwenkbar gelagert sind, um den Rahmen (70) bei der Bearbeitung um die globale Schwenkachse (54) zu verschwenken,
wobei die zwei Längsstege (74) zumindest zwei paarweise zueinander konzentrische lokale Schwenklager (82) tragen, die eine lokale Schwenkachse (84) definieren, die orthogonal zur globalen Schwenkachse (54) ist, und
wobei der Werkstückhalter (78) um die lokale Schwenkachse (84) schwenkbar ist.

2. Werkzeugmaschine (10, 410) nach Anspruch 1, wobei das Gestell (12) ein Portal (14) trägt, an dem eine erste Werkzeugspindel (22) und eine zweite Werkzeugspindel (22) translatorisch verfahrbar gelagert sind, die zueinander parallel orientiert und in der ersten horizontalen Richtung (32) zueinander versetzt sind, und wobei die beiden Werkzeugspindeln (22) am Portal (14) in der ersten horizontalen Richtung (32) und der vertikalen Richtung (40) verfahrbar sind.

3. Werkzeugmaschine (10, 410) nach Anspruch 2, wobei die beiden Werkzeugspindeln (22) unabhängig voneinander in der ersten horizontalen Richtung (32) und der vertikalen Richtung (40) gegenüber dem Portal (14) verfahrbar sind.

4. Werkzeugmaschine (10, 410) nach Anspruch 2 oder 3, wobei das Portal (14) ein am Gestell (12) festgelegtes Festportal ist, wobei der Schwenkträger (50) in einer zweiten horizontalen Richtung (32) orthogonal zur ersten horizontalen Richtung (32) am Gestell (12) verfahrbar ist, oder wobei das Portal (14) ein in der zweiten horizontalen Richtung (32) orthogonal zur ersten horizontalen Richtung (32) am Gestell (12) verfahrbares Fahrportal ist.

5. Werkzeugmaschine (10, 410) nach einem der Ansprüche 1-4, wobei zwei Werkstückhalter (78) in der ersten horizontalen Richtung (32) versetzt zueinander am Schwenkträger (50) angeordnet sind, die unabhängig voneinander jeweils um eine lokale Schwenkachse (84) verschwenkbar sind.

6. Werkzeugmaschine (10, 410) nach einem der Ansprüche 1-5, wobei die lokale Schwenkachse (84) in einer Schwenkebene (100) liegt, die parallel zur globalen Schwenkachse (54) ist und die zwei Querstege (72) und die zwei Längsstege (74) schneidet.

7. Werkzeugmaschine (10, 410) nach Anspruch 1-6, wobei der Werkstückhalter (78) bei Betrachtung entlang der lokalen Schwenkachse (84) in der Werkstückhalteöffnung (76) von den Längsstegen (74) verdeckt ist.

8. Werkzeugmaschine (10, 410) nach einem der Ansprüche 1-7, wobei die zwei Längsstege (74) jeweils zumindest zwei lokale Schwenklager (82) tragen, die in der ersten horizontalen Richtung (32) voneinander beabstandet sind.

9. Werkzeugmaschine (10, 410) nach einem der Ansprüche 1-8, wobei der zumindest eine Werkstückhalter (78) eine lokale Schwenkbrücke (96) zur Werkstückauflage umfasst, und wobei sich die lokale Schwenkbrücke (96) zwischen den zwei Längsstegen (74) erstreckt, und/oder wobei der Schwenkträger (50) ausgehend von einer horizontalen Neutrallage betragsmäßig um maximal 30° um die globale Schwenkachse (54) schwenkbar ist.

10. Werkzeugmaschine (10, 410) nach einem der Ansprüche 1-9, wobei der zumindest eine Werkstückhalter (78) einen ersten Abschnitt (128) bei einem ersten der beiden lokalen Schwenklager (82) und einen zweiten Abschnitt (128) bei einem zweiten der beiden lokalen Schwenklager (82) umfasst, zwischen denen ein Werkstück (92) freihängend aufnehmbar ist.

11. Werkzeugmaschine (10, 410) nach einem der Ansprüche 1-10, wobei der zumindest eine Werkstückhalter (78) ausgehend von einer horizontalen Neutrallage zumindest um betragsmäßig 180° um die lokale Schwenkachse (84) schwenkbar ist, und/oder wobei der zumindest eine Werkstückhalter (78) dazu ausgebildet ist, zwei Werkstücke (92) aufzunehmen, die in Bezug auf die lokale Schwenkachse (84) einander gegenüberliegend angeordnet sind.

12. Werkzeugmaschine (10, 410) nach einem der Ansprüche 1-11, wobei der Rahmen (70) des Schwenkträgers (50) an seiner Unterseite (110) in der Neutrallage mit seinen Längsstegen (74) von einer Begrenzung (112) des Arbeitsraums (16) beabstandet ist, und wobei ein effektives Abstandsmaß (114) kleiner als ein Störkreisradius (124) des Rahmens (70) ist.

13. Werkzeugmaschine (10, 410) nach einem der Ansprüche 1-12, wobei der Schwenkträger (50) ferner in einer zweiten horizontalen Richtung (62) translatorisch am Gestell (12) verfahrbar ist, die orthogonal zur ersten horizontalen Richtung (32) und zur vertikalen Richtung (40) ist, oder wobei die Werkzeugspindel (22) ferner in einer zweiten horizontalen Richtung (62) translatorisch am Gestell (12) verfahrbar ist, die orthogonal zur ersten horizontalen Richtung (32) und zur vertikalen Richtung (40) ist.

14. Verwendung einer Werkzeugmaschine (10, 410) nach einem der Ansprüche 1-13 zur Bearbeitung flacher Werkstücke (92) mit einer Längserstreckung (420), einer Quererstreckung (422) und einer Höhenerstreckung (424), wobei die Längserstreckung (420) zumindest das Fünffache der Höhenerstreckung beträgt (424), und insbesondere wobei die Längserstreckung (420) zumindest das Doppelte der Quererstreckung (422) und die Quererstreckung (422) zumindest das Dreifache der Höhenerstreckung (424) beträgt.

15. Verwendung nach Anspruch 14, wobei die Werkstücke (92) freihängend zwischen einem ersten Abschnitt (128) des Werkstückhalters (78) bei einem ersten Längssteg (74) und einem zweiten Abschnitt (128) des Werkstückhalters (78) bei einem zweiten Längssteg (74) aufgenommen werden, und wobei die Bearbeitung insbesondere eine Drehung des Werkstückhalters (78) um die lokale Schwenkachse (84) um zumindest 120° umfasst, so dass die Werkstücke (92) an zwei voneinander abgewandten Seiten bearbeitet werden können.
